# EUROPEAN PATENT APPLICATION

(11) **EP 2 170 000 A1**
(43) Date of publication of application: **31.03.2010**
(21) Application number: 08397521.9
(22) Date of filing: 24.09.2008
(51) Int. Cl.: H04W 48/00

(54) **A method and an apparatus for a mobile packet data network**

(71) Applicant: Teliasonera AB, 106 63 Stockholm (SE)
(72) Inventor: Hiltunen, Harri, 01280, VANTAA (FI); Onikki, Marko, 33430, VUORENTAUSTA (FI)
(74) Representative: Rahkonen, Erkki Juhani

(57) **Abstract**

The invention relates to a method and an apparatus for a mobile packet data network, wherein a request is received from a subscriber for transmitting customer data to an access point name. In the method it is determined whether he access point name is found from a list held by a Support Node of the mobile packet data network, and whether the subscriber belongs to a predefined category. If these conditions are met, the access point name in the request is replaced by a predefined access point name defined by an operator, and the customer data is redirected to the predefined access point name.

## Description

### Field of the Invention

This invention relates generally to data transfer in mobile packet data network. In particular, the invention relates to a method and to an apparatus for transmitting customer data based on Access Point Names.

### Background of the Invention

GPRS (General Packet Radio Services) network is a mobile packet data network configured to transmit IP packets (Internet Protocol). From network operator's point of view GPRS subscribers can be divided into different categories depending on their subscriber profile. For example, the categorization can be based on. a charging model, so that users having flat rate monthly fee and users having volume/time based charging are differentiated. Such a subscriber profile is stored in a Home Location Register (HLR). In some situations, network operators may desire to be able to redirect PDP contexts (Packet Data Protocol), that is customer traffic, from different types of subscribers to different Access Point Names (APN) or GGSNs (Gateway GPRS Support Node) in order to optimize the network performance. However, currently there is no way to redirect customer traffic originated from the terminal to a specific APN.

### Summary of the Invention

The aim of the present invention is to redirect customer traffic from a subscriber to a specific APN determined by the network operator.

This aim can be achieved by a method for a mobile packet data network, wherein a request is received from a subscriber for transmitting customer data to an access point name. The method comprises determining whether the access point name is found from a list held by a Support Node of the mobile packet data network, and determining whether the subscriber belongs to a predefined category, wherein if both determinations are correct the access point name in the request is replaced by a predefined access point name defined by an operator, and the customer data is redirected to the predefined access point name.

Another aim of the present invention is to provide a method wherein it is also determined whether the subscriber is a subscriber for Home Public Land Mobile Network (HPLMN).

Yet another aim of the present invention is to provide a method wherein subscribers are precategorized based on their charging model.

Yet another aim of the present invention is to provide a method wherein the list of access point names is stored in a Serving GPRS Support Node (SGSN).

Yet another aim of the present invention is to provide a method wherein the customer data is in the form of Packet Data Protocol (PDP).

Yet another aim of the present invention is to provide a method wherein the subscribers category is determined from a Home Location Register (HLR) or Visitor Location Register (VLR) or Home Subscriber Server (HSS).

Yet another aim of the present invention is to provide an apparatus for mobile packet data network, configured to receive a request from a subscriber for transmitting customer data to an access point name, which apparatus is configured to determine whether the access point name is found from a list stored by said apparatus and to determine whether the subscriber belongs to a predefined category, wherein if both determinations are correct, the apparatus is configured to replace the access point name in the request by a predefined access point name defined by an operator, and to redirect the customer data to the predefined access point name.

In use, the SGSN (Serving GPRS Support Node) is configured to override the APN in the PDP context Activation request received from a Mobile Terminal. This overriding is based on subscriber profile (i.e. customer subscription) in HLR/VLR (Home Location Register/Visitor Location Register) and "APN override" configuration defined in SGSN. By means of the present invention, the network operators are given a new kind of freedom to direct certain APN requests to some other APNs or GGSNs.

### Description of the Drawings

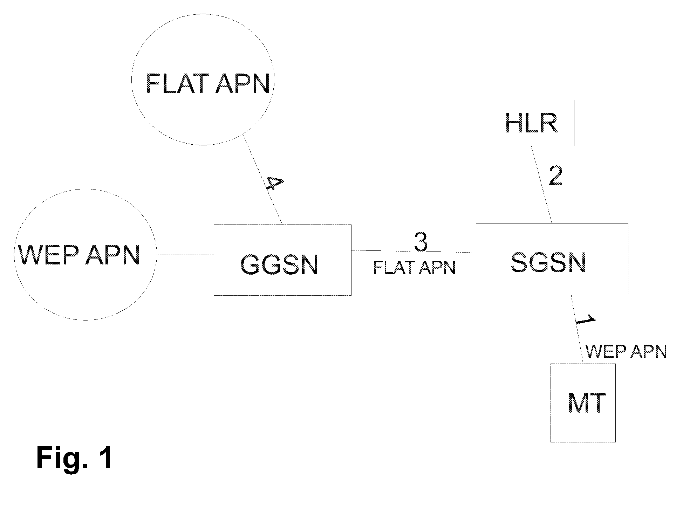

The present invention is described in more detailed manner by the following disclosure and the drawing, where
- Figure 1: illustrates an example of a network structure according to one example of the present invention.

### Detailed Description of the Invention

The main structure and functionality of GPRS system has been specified by 3GPP standard. The present invention relates to a specific feature of SGSN element which has no influence on the network functionality specified by the standard. Basically, GPRS system comprises a GPRS Tunnelling Protocol (GTP) and GPRS Support Nodes (GSN). GTP is used for carrying subscriber's data from between the GSN's. In other words, GTP transfers data from subscriber's current Serving GPRS Support Node (SGSN) to the Gateway GPRS Support Node (GGSN) which is handling the subscriber's session. A mobile terminal that is attached to a SGSN and wants to begin a data transfer, needs to activate a PDP address (Packet Data Protocol). Activation of a PDP address associates the mobile's current SGSN and the GGSN (usually of subscribers home network or visiting network). PDP context relates to that association and can be understood as "a call" in the packet data network. The PDP context is set up in order to obtain an IP address (Internet Protocol) of such a GGSN which serves the access point. For this procedure, an Access Point Name (APN) is passed to the SGSN, which initiates a DNS (Domain Name Service) query for receiving the IP address needed.

Figure 1 illustrates a very simplified structure of GPRS system for the present invention. When the APN is received (1) from a mobile terminal (MT) by the SGSN, the SGSN - according to the invention - determines whether the received APN can be found from the list of APNs that will be overridden. The SGSN is therefore configured to store a list of APNs besides its basic functionality. Overriding in this disclosure means rejecting the APN requested by the mobile terminal and replacing it with an APN defined by the network operator. The overriding is - as said - performed by the SGSN. This means that when the mobile terminal requests a PDP context activation to a certain APN that is listed in "APN override" configuration in the SGSN, the request will be overridden by a specific APN, and the PDP context will be redirected. The specific APN is determined by the network operator and it can be almost any access point in the network structure. As an example, a flat-subscriber (i.e. subscriber with a flat rate monthly fee) desires to contact Internet (WEB APN) by the mobile terminal. The SGSN notices (2) that a the subscriber making the PDP context is a flat-subscriber (from HLR/VLR) and that s/he is requesting WEB APN. This WEB APN can be found from the list of APNs configured to the SGSN. The SGSN checks which is the actual target to such a PDP context request defined by the network operator. This "actual target" is a specific APN for (in this example) all the flat-subscribers contacting WEB APN. The specific APN may be e.g. FLAT APN. FLAT APN is therefore inserted (3) to the PDP context request made by the mobile terminal instead of the WEB APN. The SGSN is configured to make a DNS query based on the specific APN (that is, in this example, FLAT APN) according to its standard operation. By this, the IP address of the correct GGSN can be found by means of the APN. After this the PDP context is redirected (4) to the specified APN (in this example FLAT APN).

The APN redirection functionality of the present application is applied when the following conditions are met. First of all, the customer subscription profile in a subscriber database has to be marked accordingly. This means that in the subscriber database, such as e.g. HLR or VLR or HSS (Home Subscriber Server), a certain bit indicates that the customer belongs to a certain category (e.g. a flat customer) whose APN requests need to be redirected. It is known that the subscriber database comprises various APN data, e.g. can the subscriber use Internet or WAP. There are also other parameters in the subscriber database depending on the responsible operator. Another condition for APN redirection, is that the mobile terminal requested APN needs to be found in "APN override" list configured on the SGSN. When at least these two conditions are met, the APN override functionality in SGSN is applied. However, in certain situations the operator may define other conditions that need to be taken into account when applying the APN override functionality. An example of such a conditionality is that the subscriber has to be HPLMN (Home Public Land Mobile Network) subscriber. This means that Mobile Country Code (MCC) and Mobile Network Code (MNC) defined in SGSN has to match corresponding customer subscription profile parameters. By means of this, the operator can concentrate only its own customers, and the APN redirection is not applied to roaming customers.

In the previous, it is disclosed that the APN redirection functionality is configured to SGSN. It should be noted that the similar functionality could also be performed in the GGSN. This is not, however, that advantageous, because if APN redirection is performed in the GGSN, the new APN (i.e. the one that replaces the APN requested) would then be in the same physical entity as the GGSN, because the tunnel has already been formed. When the functionality is configured to the SGSN, the new APN can be located almost anywhere in the service area.

The present invention concerning APN redirection has been disclosed above by means of an example. It is however appreciated that the invention itself is defined by the following claims.

## Claims

1. A method for a mobile packet data network, wherein a request is received from a subscriber for transmitting customer data to an access point name, **characterized in that** the method comprises
• determining whether the access point name is found from a list held by a Support Node of the mobile packet data network, and
• determining whether the subscriber belongs to a predefined category, wherein if both determinations are correct
• the access point name in the request is replaced by a predefined access point name defined by an operator, and
• the customer data is redirected to the predefined access point name.

2. The method according to claim 1, **characterized by** determining also whether the subscriber is a subscriber for Home Public Land Mobile Network (HPLMN).

3. The method according to claim 1 or 2, **characterized in that** subscribers are precategorized based on their charging model.

4. The method according to claim 1 or 2 or 3, **characterized in that** the list of access point names is stored in a Serving GPRS Support Node (SGSN).

5. The method according to any of the previous claim 1-4, **characterized in that** the customer data is in the form of Packet Data Protocol (PDP).

6. The method according to any of the previous claims 1-5, **characterized in that** the subscribers category is determined from subscriber database.

7. The method according to a claim 6, **characterized in that**, the subscriber database is one of the following: Home Location Register (HLR), Visitor Location Register (VLR), Home Subscriber Server (HSS).

8. An apparatus for a mobile packet data network, configured to receive a request from a subscriber for transmitting customer data to an access point name, **characterized in that** the apparatus is further configured to
• determine whether the access point name is found from a list stored by said apparatus, and to
• determine whether the subscriber belongs to a predefined category, wherein if both determinations are correct
• the apparatus is configured to replace the access point name in the request by a predefined access point name defined by an operator, and
• to redirect the customer data to the predefined access point name.

9. The apparatus according to claim 8, **characterized in that** the apparatus is configured also to determine whether the subscriber is a subscriber for Home Public Land Mobile Network (HPLMN).

10. The apparatus according to claim 8 or 9, **characterized in that** the apparatus is a Serving GPRS Support Node (SGSN).
